# EUROPEAN PATENT SPECIFICATION

(11) **EP 3 492 557 B1**
(45) Date of publication and mention of the grant of the patent: **03.03.2021**
(21) Application number: 17833850.5
(22) Date of filing: 05.06.2017
(51) Int. Cl.: C09K 21/12, C08K 3/22, C08K 3/32, C08K 5/527, C08L 23/00, C08L 101/00, C08K 5/00, C08K 5/3462, C08K 5/3492, C08K 5/52

(54) **FLAME-RETARDANT COMPOSITION AND FLAME-RETARDANT SYNTHETIC-RESIN COMPOSITION**
FLAMMHEMMENDE ZUSAMMENSETZUNG UND FLAMMHEMMENDE KUNSTHARZZUSAMMENSETZUNG
COMPOSITION IGNIFUGE ET COMPOSITION DE RÉSINE SYNTHÉTIQUE IGNIFUGE

(30) Priority: 29.07.2016 JP 2016150714
(43) Date of publication of application: 05.06.2019
(73) Proprietor: Adeka Corporation, Tokyo 116-8554 (JP)
(72) Inventor: NI, Yang, Saitama-shi Saitama 336-0022 (JP); SAKURAI, Hisashi, Saitama-shi Saitama 336-0022 (JP); SHIMIZU, Tatsuya, Saitama-shi Saitama 336-0022 (JP); YONEZAWA, Yutaka, Saitama-shi Saitama 336-0022 (JP); TANJI, Naoko, Saitama-shi Saitama 336-0022 (JP)
(74) Representative: Forstmeyer, Dietmar
(86) International application number: PCT/JP2017/020860
(87) International publication number: WO 2018/020840

(56) References cited:
- WO-A1-90/06691
- WO-A1-2005/080494
- WO-A1-2016/111074
- JP-A- H03 502 820
- US-A- 4 801 625
- US-A- 4 801 625
- US-A- 5 543 544

## Description

### Technical Field

This invention relates to a flame retardant composition and a flame-retardant synthetic resin composition containing the same.

### Background Art

Synthetic resins have been applied widely to constructional materials, automotive parts, packaging materials, agricultural materials, housings of appliances, toys, and so forth because of their excellent chemical and mechanical characteristics. However, most of synthetic resins are combustible and need to be rendered flame-retardant for some applications. It is well known that flame retardation is achieved by using halogen flame retardants, inorganic phosphorus flame retardants typified by red phosphorus and polyphosphoric acid compounds such as ammonium polyphosphates, organic phosphorus flame retardants typified by triarylphosphoric ester compounds, metal hydroxides, antimony oxide, which is a flame retardant synergist, and melamine compounds, either singly or in combinations thereof.

In particular, an intumescent flame retardant mainly comprising a salt between polyphosphoric acid or pyrophosphoric acid and a nitrogen-containing compound exhibits excellent flame retardancy. The intumescent flame retardant swells on combustion to form a swollen surface layer, which prevents diffusion of a decomposition product and heat transfer thereby to achieve flame retardation. Such a flame retardant is described, e.g., in Patent Literature 1 below.

Patent Literature 2 below proposes a flame retardant in which a nitrogen compound, such as a melamine phosphate or ammonium polyphosphate, and a bicyclic phosphate compound are used in combination.

Patent Literatures 3 and 4 below disclosed that a phosphoric ester having a specific structure is usable as a flame retardant or plasticizer for thermoplastic resins. Patent Literature 5 discloses a composition comprising a melamine salt, a piperazine salt and a bicyclophosphoric ester. Patent Literature 6 describes bicyclic phosphate compounds for addition to polymer resins.

Non-Patent Literature 1 below describes a method for synthesizing a phosphoric ester having a specific structure and the evaluation on flame retardancy of the phosphoric ester.

### Citation List

### Patent Literature

Patent Literature 1: US 2003/088000A1
Patent Literature 2: JP H4-57707B
Patent Literature 3: JP 5865195B
Patent Literature 4: JP 2014-9297A
Patent Literature 5: WO2016111074A
Patent Literature 6: US4801625A

### Non-Patent Literature:

Non-Patent Literature 1: Chem. Lett., 44(9), 2015, pp. 1220-1222

### Summary of Invention

However, the conventional flame retardants have insufficient flame retardance and should be added in large quantities so as to obtain sufficient flame retardation. When added in a large quantity, a flame retardant is poorly dispersible in synthetic resin matrix and necessitates an extended processing time or an elevated processing temperature, which results in heat application to a resin more than primarily necessary. This can cause the resin to discolor. Hence, there is a need for a flame retardant that achieves excellent flame retardancy even when used in a small amount of addition and therefore secures less resin discoloration.

An object of the invention is to provide a flame retardant composition that provides excellent flame retardancy even when used in a small amount and causes less resin discoloration. Another object of the invention is to provide a flame-retardant synthetic resin composition containing the flame retardant composition and exhibiting excellent flame retardancy and less discoloration.

The invention provides a flame retardant composition containing 20 to 50 parts by mass of component (A), 50 to 80 parts by mass of component (B), and 1 to 50 parts by mass of component (C), provided that the sum of the components (A) and (B) is 100 parts by mass:
(A) at least one melamine salt selected from the group consisting of melamine orthophosphate, melamine pyrophosphate, and melamine polyphosphate,
(B) at least one piperazine salt selected from the group consisting of piperazine orthophosphate, piperazine pyrophosphate, and piperazine polyphosphate, and
(C) a compound represented by general formula (1): 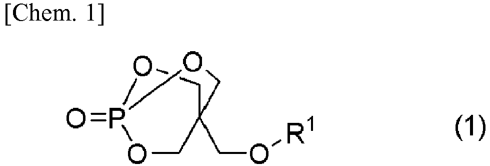
wherein R¹ represents an aromatic monocarboxylic acid residue.

The invention also provides a flame-retardant synthetic resin composition containing a synthetic resin and the flame retardant composition.

The invention also provide a molded article of the flame-retardant synthetic resin composition.

### Description of Embodiments

The invention will be described on the basis of its preferred embodiments.

The invention relates to a flame retardant composition. As used herein, the term "flame retardancy" means the property of having resistance to ignition, being ignitable but allowing only a very low speed of flame spread, or being ignitable but self-distinguishing, and preferably means meeting at least the V-2 rating according to the UL-94V standard specifically described later in Examples. The term "flame retardant composition" as used herein refers to a composition containing at least one flame retardant. The term "flame-retardant synthetic resin composition" refers to a composition containing at least one synthetic resin and having the above-defined flame retardancy.

The melamine salt that is used as component (A) in the flame retardant composition of the invention is selected from the group consisting of melamine orthophosphate, melamine pyrophosphate, and melamine polyphosphate. These melamine salts may be used either individually or in combination. Preferred of them is melamine pyrophosphate in terms of flame retardation, handling, and storage stability. When two or more of the melamine salts are used in combination, it is preferred that the mass proportion of melamine pyrophosphate in the melamine salts mixture be the highest.

While these melamine phosphates may be obtained by the reaction between a corresponding phosphoric acid or phosphate and melamine, it is preferable to use as component (A) melamine pyrophosphate or melamine polyphosphate, particularly melamine pyrophosphate, obtained by heat-condensation of melamine orthophosphate.

The piperazine salt that is used as component (B) in the flame retardant composition of the invention is selected from the group consisting of piperazine orthophosphate, piperazine pyrophosphate, and piperazine polyphosphate. These piperazine salts may be used either individually or in combination. Preferred of them is piperazine pyrophosphate in terms of flame retardation, handling, and storage stability. When two or more of the piperazine salts are used in combination, it is preferred that the mass proportion of piperazine pyrophosphate in the piperazine salts mixture be the highest.

While these piperazine phosphates may be obtained by the reaction between a corresponding phosphoric acid or phosphate and piperazine, it is preferable to use as component (B) piperazine pyrophosphate or piperazine polyphosphate, particularly piperazine pyrophosphate, obtained by heat-condensation of piperazine orthophosphate.

In the flame retardant composition of the invention, the sum of components (A) and (B) being 100 parts by mass, the content of component (A) is 20 to 50 parts by mass, preferably 40 to 50 parts by mass, and the content of component (B) is 50 to 80 parts by mass, preferably 50 to 60 parts by mass. When the contents of components (A) and (B) are within that range, the intumescence (swollen mass) formed on burning exhibits high gas barrier and self-extinguishing properties.

Component (C) for use in the flame retardant composition of the invention will then be described.

Component (C) that is used in the flame retardant composition of the invention is a compound represented by general formula (1): 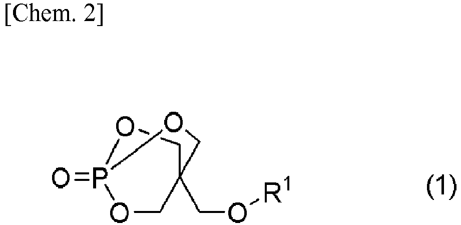 wherein R¹ represents an aromatic monocarboxylic acid residue.

The aromatic monocarboxylic acid residue as represented by R¹ is exemplified by a carboxylic acid residue bonded to an aromatic ring, such as phenyl, naphthalene, biphenyl, or biphenyl ether. The aromatic ring may have a substituent. Examples of the aromatic monocarboxylic acid residue include those represented by general formulae (2-1) to (2-4) shown below. Preferred of them are residues of C6-C10 aromatic monocarboxylic acids, particularly benzoic acid, methylbenzoic acid, and ethylbenzoic acid. 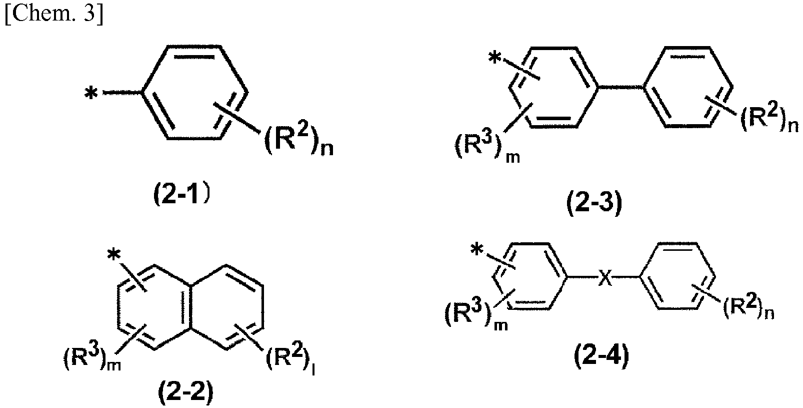 wherein R² and R³ each independently represent a C1-C10 alkyl group, a C1-C10 alkoxy group, a phenyl group, or a benzyl group; X represents a C1-C6 alkylene group, or -O-; n represents an integer 0 to 5; and m represents an integer 0 to 4; and 1 represents an integer 0 to 4.

For formulae (2-1) to (2-4), examples of the C1-C10 alkyl as R² and R³ include methyl, ethyl, propyl, isopropyl, cyclopropyl, butyl, sec-butyl, tert-butyl, isobutyl, amyl, isoamyl, tert-amyl, cyclopentyl, hexyl, 2-hexyl, 2-ethylhexyl, 3-hexyl, cyclohexyl, bicyclohexyl, 1-methylcyclohexyl, heptyl, 2-heptyl, 3-heptyl, isoheptyl, tert-heptyl, n-octyl, isooctyl, tert-octyl, 2-ethylhexyl, nonyl, isononyl, and decyl. Examples of the C1-C10 alkoxy as R² and R³ include methoxy, ethoxy, propoxy, isopropoxy, butoxy, sec-butoxy, tert-butoxy, isobutoxy, amyloxy, isoamyloxy, tert-amyloxy, hexyloxy, cyclohexyloxy, heptyloxy, isoheptyloxy, tert-heptyloxy, n-octyloxy, isooctyloxy, tert-octyloxy, 2-ethylhexyloxy, nonyloxy, and decyloxy. Examples of the C1-C6 alkylene as X include methylene, ethylene, propylene, methylethylene, butylene, 1-methylpropylene, 2-methylpropylene, 1,2-dimethylpropylene, 1,3-dimethylpropylene, 1-methylbutylene, 2-methylbutylene, 3-methylbutylene, 4-methylbutylene, 2,4-dimethylbutylene, 1,3-dimethylbutylene, pentylene, hexylene, ethane-1,1-diyl, and propane-2,2-diyl.

Examples of the compound represented by formula (1) include compound Nos. 2-1 to 2-4.

### Compound No. 1-1

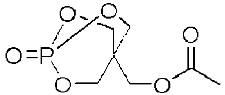

Compound No. 1-1 is a reference example used later for reference examples of flame retardant compositions.

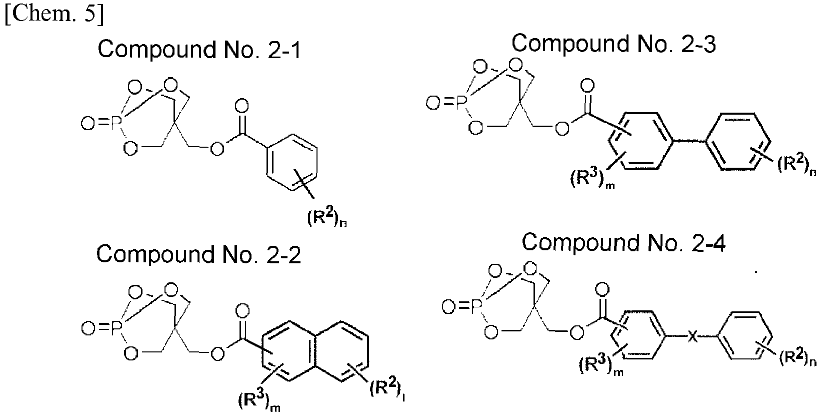

The compound of formula (1) may be prepared by known methods, including the method disclosed in non-Patent Literature 1 cited above.

The content of component (C) in the flame retardant composition of the invention is 1 to 50 parts by mass per 100 parts by mass of the sum of components (A) and (B). The content of component (C) is preferably 5 to 30 parts, more preferably 5 to 15 parts, by mass per 100 parts by mass of the sum of components (A) and (B) in terms of intumescence formation. Intumescence formation and flame retardation is secured at the content of component (C) of 1 part by mass or more. On the other hand, prevention of resin discoloration is secured at the content of component (C) of 50 parts by mass or less.

The flame retardant composition of the invention may further contain zinc oxide (ZnO) (hereinafter also referred to as component (D)).

Zinc oxide functions in the composition as a flame retardant synergist. The zinc oxide may be surface-treated. Commercially available zinc oxide products may be used, including zinc oxide JIS class 1 (from Mitsui Mining & Smelting Co., Ltd.), partially coated zinc oxide (from Mitsui Mining & Smelting), Nanofine 50 (ultrafine zinc oxide with an average particle size of 0.02 µm, from Sakai Chemical Industry Co., Ltd.), and Nanofine K (zinc silicate-coated ultrafine zinc oxide with an average particle size of 0.02 µm, from Sakai Chemical Industry).

In view of flame retardation, the content of zinc oxide in the flame retardant composition of the invention is preferably 1.0 to 10 parts, more preferably 3.0 to 8.0 parts, even more preferably 3.0 to 6.0 parts, by mass per 100 parts by mass of the sum of components (A) and (B). With the zinc oxide content of 1.0 part by mass or more, good flame retardancy is exhibited. With the zinc oxide content of 10 parts by mass or less, adverse effect on processability is avoided.

The flame retardant composition of the invention may further contain an inorganic layered compound, in which unit crystal sheets are stacked one on top of another to compose a layered structure. The term "layered structure" refers to a structure composed of layers in each of which atoms are strongly bonded to each other by, e.g., a covalent bond and densely arranged, the layers being stacked in substantially parallel relation with each other by a weak bonding force, such as van der Waals force. The inorganic layered compound may be either natural or synthetic, may be surface treated, and may have water of crystallization. Examples of the inorganic layered compound include various clay minerals, such as hydrotalcite compounds, kaolinite-serpentine group, talc-pyrophyllite group, smectite group, vermiculite group, mica group, brittle mica group, and chlorite group. These inorganic layered compounds can be used individually or in combination of two or more thereof.

The hydrotalcite compounds are carbonate double salts of magnesium- and/or zinc-aluminum. The hydrotalcite compound for use in the invention may be either natural or synthetic. Synthetic hydrotalcite compounds can be synthesized by known methods described, e.g., in JP 46-2280A, JP 50-30039A, JP 51-29129A, and JP 61-174270A. The crystal structure, crystal grain size, presence/absence and amount of crystallization water, and like attributes of the hydrotalcite compounds are not limited.

The hydrotalcite compound may be treated with perchloric acid or coated with a higher fatty acid (e.g., stearic acid), a higher fatty acid metal salt (e.g., an alkali metal oleate), a metal organic sulfonate (e.g., an alkali metal dodecylbenzenesulfonate), a higher fatty acid amide, a higher fatty acid ester, a wax, and the like.

The hydrotalcite compound is preferably a compound represented by general formula (3):

Mgₓ₁Znₓ₂Al₂(OH)_{2(x1 + x2)} + ₄·CO₃·mH₂O (3)

wherein x1 and x2 are numbers satisfying the conditions: 0 ≤ x2/x1 < 10 and 2 ≤ x1 + x2 < 20; and m is a real number.

Commercially available products of the hydrotalcite compounds may be used, including DHT-4 (hydrotalcite from Kyowa Chemical Industry Co., Ltd.), DHT-4A (hydrotalcite from Kyowa Chemical Industry Co., Ltd.), Magcera-1 (hydrotalcite from Kyowa Chemical Industry Co., Ltd.), Alkamizer-1 (hydrotalcite from Kyowa Chemical Industry Co., Ltd.), Alcamizer-2 (hydrotalcite from Kyowa Chemical Industry Co., Ltd.), Alcamizer-4 (Alcamizer P-93, zinc-modified hydrotalcite from Kyowa Chemical Industry Co., Ltd.), Alcamizer-7 (zinc-modified hydrotalcite from Kyowa Chemical Industry Co., Ltd.), and Alcamizer-5 (perchloric acid-treated hydrotalcite from Kyowa Chemical Industry Co., Ltd.).

Examples of the kaolinite-serpentine group minerals include kaolinite, dickite, nacrite, halloysite, antigorite, crysotile, lizardite, amesite, berthierine, cronstedite, nèpoulite, kellyite, fraipontite, and brindleyite. Examples of the talc-pyrophyllite group minerals include talc, willemseite, kerolite, pimelite, pyrophyllite, and ferripyrophyllite. Examples of the smectite group minerals include montmorillonite, beidellite, nontronite, saponite, sauconite, stevensite, hectorite, volkonskoite, and swinefordite. Examples of the vermiculite group minerals include trioctahedral vermiculite and dioctahedral vermiculite. Examples of the mica group minerals include tetrasilicic mica, Na-taeniolite, muscovite, phlogopite, biotite, annite, eastonite, siderophylite-annite, lepidolite, polylithionite, celadonite, ferroceladonite, ferro-aluminoceladonite, aluminoceladonite, tobelite, paragonite, and lepidolite. Examples of the brittle mica group minerals include xanthophyllite, clintonite, bityite, anandite, and margarite. Examples of the chlorite group minerals include clinochlore, chamosite, pennantite, nimite, baileychlore, donbassite, cookeite, and sudoite. These clay minerals may be treated by, for example, ion exchanging with organic substances to have improved dispersibility and the like before use as inorganic layered compounds. The organic substances used for the treatment are known, including quaternary ammonium salts, such as dimethyl distearyl ammonium and trimethyl stearyl ammonium, phosphonium salts, and imidazolium salts.

The content of the inorganic layered compound in the flame retardant composition of the invention is preferably 0.1 to 1.0 part, more preferably 0.1 to 0.7 parts, even more preferably 0.1 to 0.5 parts, by mass per 100 parts by mass of the sum of components (A) and (B).

The flame retardant composition of the invention may further contain a silane coupling agent. A silane coupling agent functions to inhibit agglomeration of flame retardant powder to thereby improve storage stability, and impart water resistance and heat resistance. Examples of the silane coupling agent include compounds represented by general formula: A-(CH₂)ₖ-Si(OR)₃, wherein A is an organic functional group; k is a number of 1 to 3, and R is methyl or ethyl. Examples of the organic group as A include alkenyl, acryl, methacryl, epoxy, amino, isocyanurate, vinyl, mercapto, ureido, thioester, and isocyanate groups.

Specific examples of the silane coupling agents include alkenyl-functional silane coupling agents, such as vinyltrimethoxysilane, vinyltriethoxysilane, vinyltriacetoxysilane, vinyltris(2-methoxyethoxy)silane, vinylmethyldimethoxysilane, octenyltrimethoxysilane, allyltrimethoxysilane, and p-styryltrimethoxysilane; acryl-functional silane coupling agents, such as 3-acryloxypropyltrimethoxysilane and 3-acryloxypropyltriethoxysilane; methacryl-functional silane coupling agents, such as 3 -methacryloxypropylmethyldimethoxysilane, 3 -methacryloxypropyltrimethoxysilane, 3-methacryloxypropylmethyldiethoxysilane, 3-methacryloxypropyltriethoxysilane, and methacryloxyoctyltrimethoxysilane; epoxy-functional silane coupling agents, such as 2-(3,4-epoxycyclohexyl)ethyltrimethoxysilane, 3-glycidoxypropylmethyldimethoxysilane, 3 -glycidoxypropyltrimethoxysilane, 3 -glycidoxypropylmethyldiethoxysilane, 3-glycidoxypropyltriethoxysilane, and glycidoxyoctyltrimethoxysilane; amino-functional silane coupling agents, such as N-2-(aminoethyl)-3-aminopropylmethyldimethoxysilane, N-2-(aminoethyl)-3-aminoporopyltrimethoxysilane, 3-aminopropyltrimethoxysilane, 3-aminopropyltriethoxysilane, 3-triethoxysilyl-N-(1,3-dimethylbutylidene)propylamine, N-phenyl-3 -aminopropyltrimethoxysilane, N,N' -bis[3 -(trimethoxysilyl)propyl] ethylenediamine, and N-(vinylbenzyl)-2-aminoethyl-3-aminopropyltrimethoxysilane hydrochloride; isocyanurate-functional silane coupling agents, such as tris(trimethoxysilylpropyl) isocyanurate; mercapto-functional silane coupling agents, such as 3 -mercaptopropylmethyldimethoxysilane, 3 -mercaptopropyltrimethoxysilane, and 3-mercaptopropyltriethoxysilane; ureido-functional silane coupling agents, such as 3-ureidopropyltrimethoxysilane and 3-ureidopropyltriethoxysilane; sulfide-functional silane coupling agents, such as bis(triethoxysilylpropyl) tetrasulfide; thioester-functional silane coupling agents, such as 3-octanoylthio-1-propyltriethoxysilane; and isocyanate-functional silane coupling agents, such as 3-isocyanatopropyltriethoxysilane and 3-isocanatopropyltrimethoxysilane. Among them preferred are epoxy-functional silane coupling agents in the interests of agglomeration inhibition to improve storage stability, water resistance, and heat resistance.

The content of the silane coupling agent in the flame retardant composition of the invention is preferably 0.1 to 5.0 parts, more preferably 0.1 to 2.0 parts, even more preferably 0.1 to 1.0 part, by mass per 100 parts by mass of the sum of components (A) and (B).

The flame retardant composition of the invention may contain silicone oil so as to inhibit agglomeration of flame retardant powder to improve storage stability and also to improve dispersibility in synthetic resin. Examples of the silicone oil include dimethyl silicone oil (polysiloxane having methyl as all the side chains and at the terminals), methylphenyl silicone oil (polysiloxane having methyl as the side chains and at the terminals and phenyl as part of the side chains), methylhydrogen silicone oil (polysiloxane having methyl as the side chains and at terminals and hydrogen as part of the side chains), and copolymers thereof. Modified silicone oils derived from these silicone oils by introducing an organic group to part of their side chains and/or terminals are also useful, including amine-modified, epoxy-modified, alicyclic epoxy-modified, carboxyl-modified, carbinol-modified, mercapto-modified, polyether-modified, long-chain alkyl-modified, fluoroalkyl-modified, higher fatty acid ester-modified, higher fatty acid amide-modified, silanol-modified, diol-modified, and phenol-modified and/or aralkyl-modified.

Specifically, examples of dimethyl silicone oil are KF-96, KF-965, and KF-968 (all from Shin-Etsu Chemical Co., Ltd.). Examples of methylhydrogen silicone oil include KF-99 and KF-9901 (both from Shin-Etsu Chemical); HMS-151, HMS-071, HMS-301, and DMS-H21 (all from Gelest, Inc.). Examples of methylphenyl silicone oil are KF-50, KF-53, KF-54, and KF-56 (all from Shin-Etsu Chemical). Examples of epoxy-modified silicone oil include X-22-343, X-22-2000, KF-101, KF-102, and KF-1001 (all from Shin-Etsu Chemical). Examples of carboxyl-modified silicone oil include X-22-3701E (from Shin-Etsu Chemical). Examples of carbinol-modified silicone oil are X-22-4039 and X-22-4015 (both from Shin-Etsu Chemical). Amine-modified silicone oil is exemplified by KF-393 (from Shin-Etsu Chemical).

Preferred of the silicone oils is methylhydrogen silicone oil in terms of prevention of agglomeration of flame retardant powder to improve storage stability and dispersibility in synthetic resin.

The content of the silicone oil, if used, in the flame retardant composition of the invention is preferably 0.01 to 5.0 parts, more preferably 0.05 to 3.0 parts, even more preferably 0.1 to 2.0 parts, by mass per 100 parts by mass of the sum of components (A) and (B) in terms of flame retardation and prevention of agglomeration of flame retardant powder to improve storage stability and dispersibility in synthetic resin.

If desired, the flame retardant composition of the invention may contain a lubricant as long as it does not adversely affect the effects of the invention. Useful lubricants include pure hydrocarbon lubricants, such as liquid paraffins, natural paraffins, microwaxes, synthetic paraffins, low-molecular polyethylenes, and polyethylene waxes; halogenated hydrocarbon lubricants; fatty acid lubricants, such as higher fatty acids and oxy fatty acids; fatty acid amide lubricants, such as fatty acid amides and bis-fatty acid amides; ester lubricants, such as lower alcohol esters of fatty acids, polyhydric alcohol esters of fatty acids (e.g., glycerides), polyglycol esters of fatty acids, and fatty alcohol esters of fatty acids (ester waxes); metal soaps; fatty alcohols; polyhydric alcohols; polyglycols; polyglycerols; partial esters of fatty acids and polyhydric alcohols; partial esters of fatty acids and polyglycol or polyglycerol; silicone oils; and mineral oils. These lubricants may be used in combination of two or more thereof. The amount of the lubricant, if added, is preferably 0.05 to 10 parts, more preferably 0.1 to 5.0 parts, by mass per 100 parts by mass of the sum of components (A) and (B).

If desired, the frame retardant composition of the invention may contain a phenol antioxidant, a phosphorus antioxidant, or like antioxidants. The antioxidant may be added to the flame retardant composition of the invention or a synthetic resin which is to be compounded with the flame retardant composition of the invention. Addition of the antioxidant is preferred to stabilize the synthetic resin.

Examples of the phenol antioxidant include 2,6-di-tert-butyl-p-cresol, 2,6-diphenyl-4-octadecyloxyphenol, distearyl(3,5-di-tert-butyl-4-hydroxybenzyl)phosphonate, 1,6-hexamethylene bis[(3,5-di-tert-butyl-4-hydroxyphenyl)propionic acid amide], 4,4'-thiobis(6-tert-butyl-m-cresol), 2,2'-methylenebis(4-methyl-6-tert-butylphenol), 2,2'-methylenebis(4-ethyl-6-tert-butylphenol), 4,4'-butylidenebis(6-tert-butyl-m-cresol), 2,2'-ethylidenebis(4,6-di-tert-butylphenol), 2,2'-ethylidenebis(4-sec-butyl-6-tert-butylphenol), 1,1,3-tris(2-methyl-4-hydroxy-5-tert-butylphenyl)butane, 1,3,5-tris(2,6-dimethyl-3-hydroxy-4-tert-butylbenzyl) isocyanurate, 1,3,5-tris(3,5-di-tert-butyl-4-hydroxybenzyl) isocyanurate, 1,3,5-tris(3,5-di-tert-butyl-4-hydroxybenzyl)-2,4,6-trimethylbenzene, 2-tert-butyl-4-methyl-6-(2-acryloyloxy-3 -tert-butyl-5 -methylbenzyl)pheno 1, stearyl (3,5-di-tert-butyl-4-hydroxyphenyl)propionate, tetrakis[methylene-3-(3,5-di-tert-butyl-4-hydroxyphenyl)propionate]methane, thiodiethylene glycol bis[(3,5-di-tert-butyl-4-hydroxyphenyl)propionate], 1,6-hexamethylene bis[(3,5-di-tert-butyl-4-hydroxyphenyl)propionate], bis[3,3-bis(4-hydroxy-3-tert-butylphenyl)butyric acid] glycol ester, bis[2-tert-butyl-4-methyl-6-(2-hydroxy-3-tert-butyl-5-methylbenzyl)phenyl] terephthalate, 1,3,5-tris[(3,5-di-tert-butyl-4-hydroxyphenyl)propionyloxyethyl] isocyanurate, 3,9-bis[1,1-dimethyl-2-{(3-tert-butyl-4-hydroxy-5-methylphenyl)propionyloxy}ethyl]-2,4 ,8,10-tetraoxaspiro[5,5]undecane, and triethylene glycol bis[(3-tert-butyl-4-hydroxy-5-methylphenyl)propionate].

The amount of the phenol antioxidant, if added, is preferably 0.001 to 5 mass%, more preferably 0.05 to 3 mass%, relative to the synthetic resin composition containing the flame retardant composition of the invention.

Examples of the phosphorus antioxidant include trisnonylphenyl phosphite, tris[2-tert-butyl-4-(3-tert-butyl-4-hydroxy-5-methylphenylthio)-5-methylphenyl] phosphite, tridecyl phosphite, octyldiphenyl phosphite, di(decyl)monophenyl phosphite, di(tridecyl)pentaerythritol diphosphite, di(nonylphenyl)pentaerythritol diphosphite, bis(2,4-di-tert-butylphenyl)pentaerythritol diphosphite, bis(2,6-di-tert-butyl-4-methylphenyl)pentaerythritol diphosphite, bis(2,4,6-tri-tert-butylphenyl)pentaerythritol diphosphite, bis(2,4-dicumylphenyl)pentaerythritol diphosphite, tetratridecyl isopropylidenediphenol diphosphite, tetratridecyl 4,4'-n-butylidenebis(2-tert-butyl-5-methylphenyl) diphosphite, hexatridecyl 1,1,3-tris(2-methyl-4-hydroxy-5-tert-butylphenyl)butane triphosphite, tetrakis(2,4-di-tert-butylphenyl)biphenylene diphosphonite, 9,10-dihydro-9-oxa-10-phosphaphenanthrene 10-oxide, 2,2'-methylenebis(4,6-di-tert-butylphenyl)-2-ethylhexyl phosphite, 2,2'-methylenebis(4,6-di-tert-butylphenyl)octadecyl phosphite, 2,2'-ethylidenebis(4,6-di-tert-butylphenyl) fluorophosphite, tris(2-[(2,4,8,10-tetrakis-tert-butyldibenzo[d,f][1,3,2]dioxaphosphepin-6-yl)oxy]ethyl)ami ne, and phosphite of 2-ethyl-2-butylpropylene glycol and 2,4,6-tri-tert-butylphenol.

The amount of the phosphorus antioxidant, if added, is preferably 0.001 to 5 mass%, more preferably 0.05 to 3 mass%, relative to the synthetic resin composition containing the flame retardant composition of the invention.

The flame retardant composition of the invention may optionally contain a nucleating agent as long as it does not adversely affect the effects of the invention. Any nucleating agents commonly employed for polymers may be used as appropriate. In the invention, any of an inorganic nucleating agent and an organic nucleating agent may be used. The nucleating agent may be added to the synthetic resin which is to be compounded with the flame retardant composition of the invention. The amount of the nucleating agent, if added, is preferably 0.001 to 5 parts by mass, more preferably 0.01 to 1 part by mass, per 100 parts by mass of the sum of components (A) and (B).

Examples of the inorganic nucleating agent include kaolinite, synthetic mica, clay, zeolite, graphite, carbon black, magnesium oxide, titanium oxide, calcium sulfide, boron nitride, calcium carbonate, barium sulfate, aluminum oxide, neodymium oxide, and metal phenylphosphonates. The inorganic nucleating agent may be modified with an organic substance so as to have improved dispersibility in the composition.

Examples of the organic nucleating agent include metal salts of organic carboxylic acids, such as sodium benzoate, potassium benzoate, lithium benzoate, calcium benzoate, magnesium benzoate, barium benzoate, lithium terephthalate, sodium terephthalate, potassium terephthalate, calcium oxalate, sodium laurate, potassium laurate, sodium myristate, potassium myristate, calcium myristate, sodium octacosanoate, calcium octacosanoate, sodium stearate, potassium stearate, lithium stearate, calcium stearate, magnesium stearate, barium stearate, sodium montanate, calcium montanate, sodium toluate, sodium salicylate, potassium salicylate, zinc salicylate, aluminum dibenzoate, potassium dibenzoate, lithium dibenzoate, sodium β-naphthalate, and sodium cyclohexanecarboxylate; organic sulfonic acid salts, such as sodium p-toluenesulfonate and sodium sulfoisophthalate; carboxylic amides, such as stearamide, ethylenebislauramide, palmitamide, hydroxystearamide, erucamide, and trimesic acid tris(tert-butyramide); benzylidenesorbitol and its derivatives, metal salts of phosphorus compounds, such as sodium 2,2'-methylenebis(4,6-di-tert-butylphenyl)phosphate; and sodium 2,2-methylbis(4,6-di-tert-butylphenyl).

The flame retardant composition of the invention may optionally contain a plasticizer as long as it does not impair the effects of the invention. Any plasticizers that are commonly used for polymers may be used as appropriate, including polyester plasticizers, glycerol plasticizers, polycarboxylic ester plasticizers, polyalkylene glycol plasticizers, and epoxy plasticizers. The plasticizer may be added to the synthetic resin which is to be compounded with the flame retardant composition of the invention. The amount of the plasticizer, if used, is preferably 1 to 100 parts, more preferably 3 to 80 parts, by mass per 100 parts by mass of the sum of components (A) and (B).

If desired, the flame retardant composition of the invention may contain additives commonly used for synthetic resins unless the effects of the invention are impaired. Useful additives include crosslinking agents, antistatics, metal soaps, fillers, antifogging agents, anti-plate-out agents, surface treating agents, fluorescent agents, antifungals, bactericides, foaming agents, metal inactivators, parting agents, pigments, processing aids other than acrylic processing aids, and so forth. The additives may be added to the synthetic resin which is to be compounded with the flame retardant composition of the invention.

The flame retardant composition of the invention may be prepared by mixing the essential components (A) to (C) and, if necessary, component (D) and other optional components using any of various mixing machines with or without heating. Examples of suitable mixing machines include a tumbler mixer, a Henschel mixer, a ribbon blender, a V-blender, a W-blender, a super mixer, and a Nauta mixer.

The flame retardant composition of the invention is effective in making a synthetic resin flame-retardant and preferably combined with a synthetic resin to provide a flame-retardant synthetic resin composition (hereinafter "the flame-retardant synthetic resin composition of the invention").

The synthetic resins to be made flame-retardant by the flame retardant composition of the invention include various thermoplastic and thermosetting resins. Examples of the thermoplastic resins include polyolefin resins, halogen-containing resins, aromatic polyester resins, linear polyester resins, degradable aliphatic polyamide resins, cellulose ester resins, polycarbonate resins, polyurethanes, and polyblends thereof. Examples of the thermosetting resins include phenol resins, urea resins, melamine resins, epoxy resins, and unsaturated polyester resins.

Other synthetic resins that can be rendered flame-retardant by the flame retardant composition of the invention include olefinic thermoplastic elastomers (TPEs), styrene TPEs, polyester TPEs, nitrile TPEs, nylon TPEs, vinyl chloride TPEs, polyamide TPEs, and polyurethane TPEs.

These synthetic resins may be used either individually or in combination of two or more thereof. These synthetic resins may be alloyed.

The above described synthetic resins may be used irrespective of molecular weight, degree of polymerization, density, softening point, solvent-insoluble content, degree of stereoregularity, presence or absence of catalyst residue, type and copolymerization ratio of monomers, type of catalyst for polymerization (e.g., Ziegler type or metallocene type), and the like. With regard to the thermoplastic resins, those having a melt flow rate (MFR) of 2.0 to 80 g/10 min, especially those having an MFR of 8.0 to 60 g/10 min, as measured at 230°C and a 2.16 kg load in accordance with JIS K7210 are preferred in view of processability and flame retardancy.

Of the above recited synthetic resins preferred are polyolefin resins in view of excellent flame retardation effects obtained. Examples of the polyolefin resins include α-olefm polymers, such as polyethylene, low density polyethylene, linear low density polyethylene, high density polyethylene, polypropylene, homopolypropylene, random copolymer polypropylene, block copolymer polypropylene, impact copolymer polypropylene, high impact copolymer polypropylene, isotactic polypropylene, syndiotactic polypropylene, hemisotactic polypropylene, maleic anhydride-modified polypropylene, polybutene, cycloolefin polymers, stereoblock polypropylene, poly-3-methyl-1-butene, poly-3-methyl-1-pentene, and poly-4-methyl-1-pentene; and α-ole6n copolymers, such as ethylene-propylene block or random copolymers, ethylene-methyl methacrylate copolymers, and ethylene-vinyl acetate copolymers.

The flame-retardant synthetic resin composition of the invention preferably contains 50 to 90 mass%, more preferably 60 to 80 mass%, of the synthetic resin and 10 to 40 mass%, more preferably 20 to 30 mass%, of the flame retardant composition. With the flame retardant composition content being 10 mass% or more, the resin composition exhibits sufficient flame retardancy. With the flame retardant composition content being not more than 40 mass%, the intrinsic physical properties of the resin are not impaired.

The flame-retardant synthetic resin composition of the invention can be molded to provide molded articles having high flame retardancy. The flame-retardant synthetic resin composition may be molded by any molding methods, including extrusion, calendering, injection molding, rolling, compression molding, and blow molding, to give molded articles of various shapes, such as plates, sheets, films, and irregular shapes.

The flame-retardant synthetic resin composition of the invention is applicable to housings (frames, cases, covers, and enclosures) and parts of electric vehicles, machinery, electric and electronic equipment, and OA equipment, and automotive interior and exterior materials, particularly those needed to meet the UL94 5VA standard.

The flame-retardant synthetic resin composition of the invention and its molded articles find wide applications in various industrial fields, including electric & elecronics, communications, agriculture, forestry, fisheries, mining, construction, foods, fibers, clothing, remedy, coal, petroleum, rubber, leather, automobiles, precision equipment, lumber, building materials, civil engineering, furniture, printing, musical instruments, and so on. Specifically, the applications include housings (frames, cases, covers, and enclosures) and parts of stationery and OA equipment (such as printers, personal computers, word processors, keyboards, PDAs (personal digital assistants), telephone sets, copiers, fax machines, ECRs (electronic cash registers), calculators, electronic diaries, cards, holders, and writing tools), household electric appliances (such as laundry machines, refrigerators, vacuum cleaners, microwave ovens, lighting equipment, game machines, irons, and *kotatsu*)*,* audio and visual equipment (such as TV sets, VTRs, camcorders, radio-cassette recorders, tape recorders, mini discs, CD players, speakers, and liquid crystal displays), electric and electronic components and communication equipment (such as connectors, relays, capacitors, switches, printed circuit boards, coil bobbins, semiconductor sealants, LED sealants, electric wires, cables, transformers, deflection yokes, distribution boards, and clocks), and OA equipment; and automotive interior and exterior materials.

The flame-retardant synthetic resin composition of the invention and its molded articles also find use as materials for gas (petrol) vehicles, hybrid vehicles, electrical vehicles, other vehicles, boats, ships, aircrafts, buildings, and houses, such as seats (stuffing and upholstery), belts, ceiling covering, convertible tops, arm rests, door trims, rear package trays, carpets, rugs, mats, sun visors, wheel covers, mattress covers, air bags, insulating materials, assist grips, assist straps, wire covering, electrical insulators, paints, coatings, overlays, flooring, inside corner moldings, carpet, wallpaper, wall covering, exterior covering, interior covering, roofing, decks, walls, pillars, floor plates, fences, frames and moldings, profiles for windows and doors, roof shingles, siding boards, terraces, balconies, soundproofing boards, heat insulating boards, and window boards; civil engineering materials; and housewares and sporting equipment, such as clothing, curtains, bed sheets, chip boards, fiber boards, carpets and rugs, doormats, sheets, buckets, hoses, containers, glasses, bags, cases, goggles, skis, rackets, tents, and musical instruments.

### Examples

The invention will now be illustrated in greater detail with reference to Examples, but the invention is not deemed to be limited thereto. The numerical values for formulations in Table 1 are in parts by mass, and those in Tables 2 and 3 are in mass percent.

Examples 2 and 4, Reference Examples 1,3 and 5, and Comparative Examples 1 to 3

Flame retardant compositions of the invention and comparative flame retardant compositions were prepared according to the formulations shown in Table 1.

**Table 1**

| Formulation | | Example | | | | | Comp. Example | | |
|---|---|---|---|---|---|---|---|---|---|
| | | 1 | 2 | 3 | 4 | 5 | 1 | 2 | 3 |
| (A) | Melamine Pyrophosphate* ¹ | 40 | 40 | 40 | 40 | 20 | 40 | 40 | 20 |
| (B) | Piperazine Pyrophosphate ^{*2} | 60 | 60 | 60 | 60 | 80 | 60 | 60 | 80 |
| (C) | Compound No. 1-1 | 5.3 | | 5.3 | | 5.3 | | | |
| | Compound No. 2-1^{*3} | | 5.3 | | 5.3 | | | | |
| (D) | Zinc Oxide (ZnO) | | | 5 | 5 | | | 5 | |
| Silicone Oil | KF-96*⁴ | 0.3 | 0.3 | | | 0.3 | 0.3 | | |
| | KF-99*⁵ | 0.3 | 0.3 | | | 0.3 | 0.3 | | |

| | | | | | | | | | |
|---|---|---|---|---|---|---|---|---|---|
| *1: Pyrophosphoric acid: melamine = 1:2 (molar ratio) *2: Pyrophosphoric acid: piperazine =1:1 (molar ratio) *3: Compound No. 2-1 in which n = 0. *4: Dimethyl silicone oil from Shin- Etsu Chemical Co., Ltd. *5: Methylhydrogen silicone oil from Shin-Etsu Chemical Co., Ltd. | | | | | | | | | |

### Examples 6 to 16 and Comparative Examples 4 to 9

A polypropylene resin composition was provided from 60 parts (by mass, hereinafter the same) of polypropylene (MFR: 8 g/10 min as measured at 2.16 kg load and 230°C in accordance with JIS K7210), 0.1 parts of calcium stearate as an organic nucleating agent, 0.1 parts of tetrakis[methylene-3-(3,5-di-tert-butyl-4-hydroxyphenyl)propionate]methane as a phenol antioxidant, 0.1 parts of tris(2,4-di-tert-butylphenyl) phosphite as a phosphorus antioxidant, and 0.3 parts of glycerol monostearate as a lubricant. To the polypropylene resin composition was added each of the flame retardant compositions prepared in Examples 2 and 4, Reference Examples 1,3 and 5, and Comparative Examples 1 to 3 in a compounding ratio (mass%) shown in formulations in Tables 2 or 3 to prepare flame-retardant synthetic resin compositions of Examples 6 to 16 and comparative flame-retardant synthetic resin compositions of Comparative Examples 4 to 9.

The flame retardant compositions obtained in Examples 2 and 4, Reference Examples 1,3 and 5, were designated flame retardant compositions 1 to 5, respectively. The comparative flame retardant compositions obtained in Comparative Examples 1 to 3 were designated comparative flame retardant compositions 1 to 3, respectively.

The resulting flame-retardant synthetic resin composition was press molded at 220°C and 5 to 15 MPa for 15 minutes to make specimens for flammability test measuring 127 mm (length) × 12.7 mm (width) × 1.6 mm (thickness). The flame retardancy was evaluated using the specimens in accordance with the test method described below. The results obtained are shown in Tables 2 and 3.

The resulting flame-retardant synthetic resin composition was press molded at 220°C and 5 to 15 MPa for 15 minutes to make specimens for discoloration test measuring 60 mm (length) × 30 mm (width) × 2 mm (thickness). Discoloration was evaluated using the specimens in accordance with the method below. The results are shown in Tables 2 and 3.

### Flammability Test Method (UL-94V standard):

Each specimen (127 mm long, 12.7 mm wide, 1.6 mm thick) was held with the long axis vertical. A flame of a burner was applied to the lower end of the specimen for 10 seconds and removed, and the flame duration was recorded. As soon as the specimen stopped burning, the flame was reapplied for additional 10 seconds, and the flame duration was measured in the same manner as in the first flame application. Ignition of the cotton layer placed below the specimen by any drips of flaming particles was also observed. The flame duration after each flame application and the ignition of the cotton layer were interpreted into a UL-94V flammability rating. The V-0 rating is the lowest flammability. The V-1 rating is less flame retardancy, and the V-2 rating is still less flame retardancy.

### Discoloration Evaluation Method (YI, b*):

The YI (yellowness index) and b* value of the specimens (60 mm long, 30 mm wide, 2 mm thick) were measured using SC-P from Suga Test Instruments Co., Ltd.

**Table 2**

| Formulation | Example | | | | | | | | | | |
|---|---|---|---|---|---|---|---|---|---|---|---|
| | 6 | 7 | 8 | 9 | 10 | 11 | 12 | 13 | 14 | 15 | 16 |
| Flame Retardant Composition 1 | 22% | 24% | | | | | | | | | |
| Flame Retardant Composition 2 | | | 22% | 24% | | | | | | | |
| Flame Retardant Composition 3 | | | | | 20% | 22% | 24% | | | | |
| Flame Retardant Composition 4 | | | | | | | | 20% | 22% | 24% | |
| Flame Retardant Composition 5 | | | | | | | | | | | 24% |
| UL94V Rating | V-2 | V-0 | V-2 | V-0 | V-2 | V-0 | V-0 | V-2 | V-0 | V-0 | V-0 |
| YI | -3.48 | -3.25 | -3.18 | -3.06 | -3.35 | -2,49 | -2.43 | -3.45 | -2.43 | -1.99 | -1.09 |
| (b*) | (-1.62) | (-1.53) | (-1.49) | (-1.44) | (-1.5) | (-1.09) | (-1.06) | (-1.53) | (-1.06) | (-0.85) | (-0.35) |

**Table 3**

| | Comparative Example | | | | | |
|---|---|---|---|---|---|---|
| | 4 | 5 | 6 | 7 | 8 | 9 |
| Comp. Flame Retardant Composition 1 | 26% | 28% | | | | |
| Comp. Flame Retardant Composition 2 | | | 22% | 24% | 26% | |
| Comp. Flame Retardant Composition 3 | | | | | | 24% |
| UL94V Rating | V-2 | V-0 | V-2 | V-2 | V-0 | V-2 |
| YI | -2.75 | -2.58 | -1.01 | -0.34 | 0.32 | 0.93 |
| (b*) | (-1.29) | (-1.22) | (-0.34) | (0.00) | (0.33) | (0.76) |

It is apparent from the results in Tables 2 and 3 that the synthetic resin compositions containing the flame retardant composition of the invention, which contains the compound of formula (1) as component (C), exhibit improved flame retardancy and less discoloration when used in lower amounts, as compared with the comparative synthetic resin compositions containing the comparative flame retardant composition. When comparing, for example, Example 11 and Comparative Example 8, in which both the resin composition of the invention and the comparative resin composition are almost the same composition except for the presence or absence of the compound of formula (1) as component (C), the resin composition of Example 11 exhibits flame retardancy and less discoloration equal to or superior to the resin composition of Comparative Example 11 even with a smaller amount of the flame retardant composition than in Comparative Example 8.

### Industrial Applicability

The invention provides a flame retardant composition and a flame-retardant synthetic resin composition containing the same. The flame retardant composition achieves high flame retardancy even when used in a small amount of addition and therefore provides less resin discoloration.

## Claims

1. A flame retardant composition comprising: 20 to 50 parts by mass of component (A), 50 to 80 parts by mass of component (B), and 1 to 50 parts by mass of component (C), provided that the sum of components (A) and (B) is 100 parts by mass:
(A) at least one melamine salt selected from the group consisting of melamine orthophosphate, melamine pyrophosphate, and melamine polyphosphate,
(B) at least one piperazine salt selected from the group consisting of piperazine orthophosphate, piperazine pyrophosphate, and piperazine polyphosphate, and
(C) a compound represented by general formula (1): 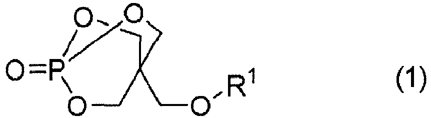 wherein R¹ represents an aromatic monocarboxylic acid residue.

2. The flame retardant composition according to claim 1, further comprising 1.0 to 10 parts by mass of zinc oxide as component (D), per 100 parts by mass of the sum of components (A) and (B).

3. A flame-retardant synthetic resin composition comprising a synthetic resin and the flame retardant composition according to claim 1 or 2.

4. The flame retardant synthetic resin composition according to claim 3, wherein the synthetic resin is a polyolefin resin.

5. A molded article of the flame-retardant synthetic resin composition according to claim 3 or 4.

## Patentansprüche

1. Flammhemmende Zusammensetzung, umfassend: 20 bis 50 Massenteile der Komponente (A), 50 bis 80 Massenteile der Komponente (B) und 1 bis 50 Massenteile der Komponente (C), vorausgesetzt, dass die Summe der Komponenten (A) und (B) 100 Massenteile beträgt:
(A) mindestens ein Melaminsalz, ausgewählt aus der Gruppe, bestehend aus Melaminorthophosphat, Melaminpyrophosphat und Melaminpolyphosphat;
(B) mindestens ein Piperazinsalz, ausgewählt aus der Gruppe, bestehend aus Piperazinorthophosphat, Piperazinpyrophosphat und Piperazinpolyphosphat und
(C) eine Verbindung, dargestellt durch die allgemeine Formel (1) : 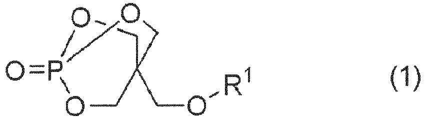 worin R¹ einen aromatischen Monocarbonsäurerest darstellt.

2. Flammhemmende Zusammensetzung nach Anspruch 1, ferner umfassend 1,0 bis 10 Massenteile Zinkoxid als Komponente (D) pro 100 Massenteile der Summe der Komponenten (A) und (B).

3. Flammhemmende Kunstharzzusammensetzung, umfassend ein Kunstharz und die flammhemmende Zusammensetzung nach Anspruch 1 oder 2.

4. Flammhemmende Kunstharzzusammensetzung nach Anspruch 3, wobei das Kunstharz ein Polyolefinharz ist.

5. Formteil der flammhemmenden Kunstharzzusammensetzung nach Anspruch 3 oder 4.

## Revendications

1. Composition ignifuge comprenant: 20 à 50 parties en masse du composant (A), 50 à 80 parties en masse du composant (B), et 1 à 50 parties en masse du composant (C), à condition que la somme de composants (A) et (B) est de 100 parties en masse:
(A) au moins un sel de mélamine choisi dans le groupe constitué par l'orthophosphate de mélamine, le pyrophosphate de mélamine et le polyphosphate de mélamine,
(B) au moins un sel de pipérazine choisi dans le groupe constitué par l'orthophosphate de pipérazine, le pyrophosphate de pipérazine et le polyphosphate de pipérazine, et
(C) un composé représenté par la formule générale (1): 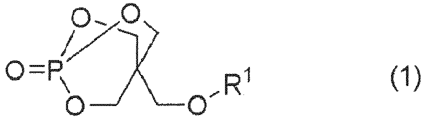 où R¹ représente un résidu d'acide monocarboxylique aromatique.

2. Composition ignifuge selon la revendication 1, comprenant en outre 1,0 à 10 parties en masse d'oxyde de zinc en tant que composant (D), pour 100 parties en masse de la somme des composants (A) et (B).

3. Composition de résine synthétique ignifuge comprenant une résine synthétique et la composition ignifuge selon la revendication 1 ou 2.

4. Composition de résine synthétique ignifuge selon la revendication 3, dans laquelle la résine synthétique est une résine polyoléfinique.

5. Article moulé de la composition de résine synthétique ignifuge selon la revendication 3 ou 4.
